(19) Europäisches Patentamt
European Patent Office
Office européen des brevets

(11) **EP 2 207 139 B1**

(12) **EUROPEAN PATENT SPECIFICATION**

(45) Date of publication and mention
of the grant of the patent:
**15.07.2015 Bulletin 2015/29**

(51) Int Cl.:
***G06T 7/20*** *(2006.01)*

(21) Application number: **10150129.4**

(22) Date of filing: **05.01.2010**

(54) **Motion estimation by a new and adaptive hierarchical phase correlation**

Bewegungsschätzung mittels einer neuen und adaptiven hierarchischen Phasenkorrelation

Évaluation de mouvements par une corrélation de phase hiérarchique nouvelle et adaptative

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.01.2009 TR 200900177**

(43) Date of publication of application:
**14.07.2010 Bulletin 2010/28**

(73) Proprietor: **Vestel Elektronik Sanayi ve Ticaret A.S.**
**45030 Manisa (TR)**

(72) Inventors:
• **Alimli, Hasan**
**45030 Manisa (TR)**
• **Ikizler, Anil**
**45030 Manisa (TR)**

(74) Representative: **Cayli, Hülya**
**Paragon Consultancy Inc.**
**Koza Sokak No: 63/2**
**GOP**
**06540 Ankara (TR)**

(56) References cited:
• **ARGYRIOU V ET AL: "Motion Estimation Using Quad-Tree Phase Correlation" IMAGE PROCESSING, 2005. ICIP 2005. IEEE INTERNATIONAL CONFERENCE ON GENOVA, ITALY 11-14 SEPT. 2005, PISCATAWAY, NJ, USA, IEEE, PISCATAWAY, NJ, USA LNKD- DOI: 10.1109/ICIP.2005.1529942, vol. 1, 11 September 2005 (2005-09-11), pages 1081-1084, XP010851010 ISBN: 978-0-7803-9134-5**

• **ARGYRIOU V ET AL: "Performance study of gradient correlation for sub-pixel motion estimation in the frequency domain" IEE PROCEEDINGS: VISION, IMAGE AND SIGNAL PROCESSING, INSTITUTION OF ELECTRICAL ENGINEERS, GB LNKD- DOI:10.1049/IP-VIS: 20051073, vol. 152, no. 1, 28 February 2005 (2005-02-28), pages 107-114, XP006023461 ISSN: 1350-245X**

• **THOMAS G A: "TELEVISION MOTION MEASUREMENT FOR ATV AND OTHER APPLICATIONS" BBC RESEARCH AND DEVELOPMENT REPORT, BRITISH BROADCASTING CORPORATION, GB, 1 September 1987 (1987-09-01), pages 1-20, XP000611063 ISSN: 1361-2379**

• **MORANDI C ET AL: "DIGITAL IMAGE REGISTRATION BY PHASE CORRELATION BETWEEN BOUNDARY MAPS" IEE PROCEEDINGS E. COMPUTERS & DIGITAL TECHNIQUES, INSTITUTION OF ELECTRICAL ENGINEERS. STEVENAGE, GB, vol. 134, no. 2, PART E, 1 March 1987 (1987-03-01), pages 101-104, XP001058273 ISSN: 0143-7062**

• **PEARSON J J ET AL: "VIDEO-RATE IMAGE CORRELATION PROCESSOR" PROCEEDINGS OF THE SPIE, SPIE, US, vol. 119, 1 January 1977 (1977-01-01), pages 197-205, XP009043064 ISSN: 0277-786X**

• **ARGYRIOU V ET AL: "Quad-Tree Motion Estimation in the Frequency Domain Using Gradient Correlation", IEEE TRANSACTIONS ON MULTIMEDIA, IEEE SERVICE CENTER, PISCATAWAY, NJ, US, vol. 9, no. 6, 1 October 2007 (2007-10-01), pages 1147-1154, XP011346447,**

EP 2 207 139 B1

**Description**

**Technical Field**

The present invention relates to a motion estimation method, which is based on phase correlation (association) of the frame (the smallest meaningful part in image data) sequences.

**Prior Art**

Motion estimation is the processes which generate the motion vectors that determine how an object moves from previous frame to a current frame. It has been explored by many researchers in the past 30 years and they are in many applications, such as video technology, computer vision, tracking and industrial monitoring.

There are two main ways for motion estimation as in spatial domain and frequency domain. Block matching and differential-gradient based methods are the common and famous methods in the spatial domain.

The main idea behind block matching algorithm is to divide the current frame into a matrix of blocks. Then these macro blocks are compared with corresponding blocks in the next frame and neighbouring blocks that are adjacent to the said blocks. The least comparison results a motion vector which shows the path of that block. On the other hand, the main idea behind differential-gradient based method is derivation of frame sequence.

In the prior art some studies and papers about motion estimation is known. For example, the paper with a title "Motion Estimation Using Quad-Tree Phase Correlation" which belongs to Argyriou, V. and Vlachos, T. was published on IEEE International Conference on Volume 1 in 2005. This document is about a quad-tree scheme for obtaining motion vectors of interframe motion in the frequency domain. The method is also based on phase correlation and uses key features of the phase correlation surface to control the partition of a parent block (frame) to four children quadrants (sub frames). The partition criterion is applied iteratively until a target number of motion vectors or if no more than a single motion component per block can be identified.

Methods in this document can be explained as follows:

The starting point for a quad-tree partition of frame $f_T$ and $f_{T+1}$ involves a global phase correlation operation between two frames. An artificial example with three moving objects and the resulting correlation surface $c_{t,t+1}$ is shown in the Figure-1 in which figure, the left part shows three objects in reference frame $f_t$ and their positions in the target frame $f_{t+1}$; and the right part shows the resulting correlation surface.

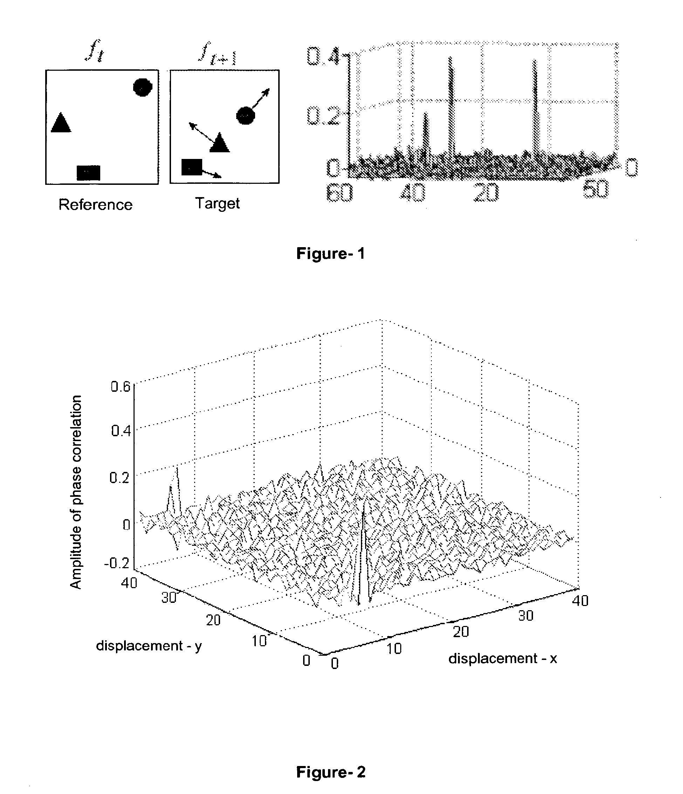

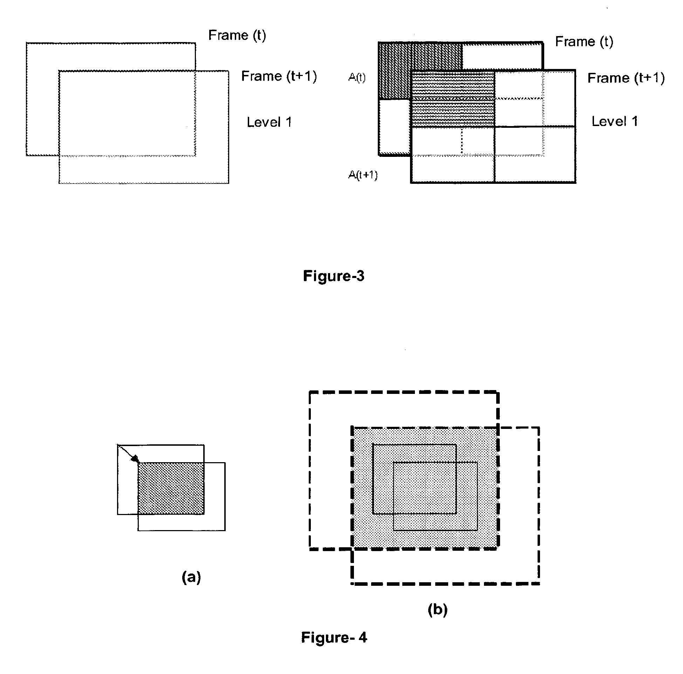

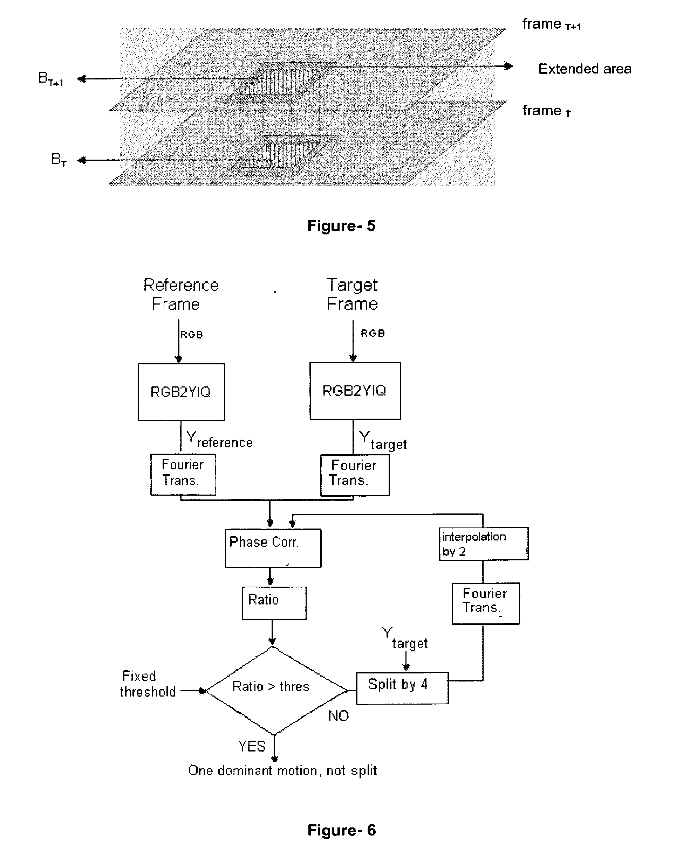

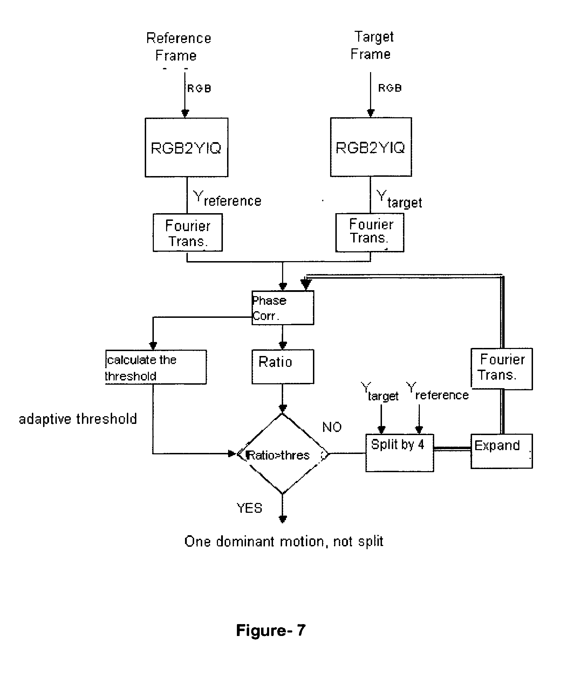

The second step is to examine whether target frame should be partitioned or not to four quadrants. The height of each of the peaks on correlation surface in Figure 1 is a good measure of reliability of the corresponding motion component. For example, high and sharp peaks can be relied upon to correspond to real motion while low and/or blunt peaks may be the result of noise. The ratio between first highest peak (FH) and second highest peak (SH) is a well measure for partition criteria.

$$r = \frac{FH}{SH}$$

(Equation-1)

If the ratio is higher than a threshold we assume that there is only one dominant motion component in the scene and the algorithm does not process any further, otherwise the target frame is partitioned to four quadrants.

The next step is correlating unequal size image blocks (frames). Assuming that the target frame has been partitioned as mentioned above, motion parameters need to be estimated for each of the resulting four quadrants. Nevertheless, this has the obvious disadvantage of requiring a phase correlation operation to be performed between two frames of unequal sizes i.e. the reference image being four times larger than the target. The paper of Argyriou, V. and Vlachos, T. referred to interpolating upsampling of $F_{T+1}$ of Fourier Transform of $f_{T+1}$. Linear interpolation were used for obtaining dimensions are now identical to reference frame.

There is also an additive processes, as sub-pixel accuracy for accuracy motion estimation which is a general additional method preferred much.

The above mentioned method has a further disadvantage since the threshold value used in the partition criteria is fixed. Since the threshold value can not adapt itself according to the result of the phase correlation, accurate results may not be obtained in some cases.

## Brief Summary of Invention

In accordance with the present invention, first step is a phase correlation operation between two frames, such as $F_t$ and $F_{t+1}$. Then depending on the ratio of peaks on the obtained correlation surface, blocks can be split into quadrants, and this splitting procedure processes in an iterative fashion to determine whether the quadrant block will be partitioned any further or not. This is one of the new features of the present invention which is expressed by an iteration formula. Then, two of the sub blocks are overlapped, and the overlapping area is extended. It is an important step because in some cases, it would be better that overlapping area is extended for obtaining reliable data during phase correlation. The present invention further provides an automatic threshold formula. Using this algorithm, the threshold value can be calculated automatically in an adaptive way. Since the threshold is adaptive, not fixed as known from prior art, this case supplies more reliable data for phase correlation.

## Object of the Invention

The object of the present invention is to provide a motion estimation method with a new approach and hierarchical algorithms and provide a much bigger Peak Signal to Noise Ratio (PSNR) value compared to simple phase correlation with fixed block size.

The other object of the invention is to reduce the required external memory capacity for saving the results of the interpolated Fourier Transform of quadrants by eliminating the need for the step of interpolating the quadrants.

A further object of the present invention is to provide higher PSNR values compared to the known methods, by eliminating the need to interfere into algorithm by the way of fixed threshold.

## Brief Description of the Drawings

Figure - 1 illustrates a sample scheme presenting three moving objects and the resulting correlation surface.
Figure - 2 illustrates the graph of phase correlation according to motion vector.
Figure - 3 illustrates two blocks (frames) which are split into quadrants.
Figure - 4(a) illustrates a sample view of the overlapping area in accordance with an embodiment of the present invention.
Figure - 4(b) illustrates a sample view of the extended overlapping area in accordance with an embodiment of the present invention.
Figure - 5 illustrates the extended sub image area (sub block) in accordance with an embodiment of the present invention.
Figure - 6 illustrates the steps of the prior art method.
Figure - 7 illustrates the steps of an embodiment of the present invention.

## Detailed Description of Invention

This invention performs motion estimation by using phase correlation methods. It uses the shift property of the Fourier Transform. According to this property, a shift in the temporal domain is equivalent to a phase shift in the frequency domain. Primary and general information about the phase correlation which includes the Fourier Transform can be explained by following equations:

There is a time-shift feature of Fourier Transform (Equation-2)

$$x(t - t_0) \leftrightarrow e^{-jwt_0} X(jw) \qquad \text{Equation-2}$$

According to Equation-2, a shift in the temporal domain is equivalent to a phase shift in the frequency domain.

Assuming a translational shift between the two frames;

$$s(n_1, n_2, k) = s(n_1 + d_1, n_2 + d_2, k + 1) \qquad \text{Equation-3}$$

Their 2-D Fourier transforms are;

$$S_k(f_1, f_2) = S_{k+1}(f_1, f_2).e^{-j2\pi(d_1.f_1 + d_2.f_2)}$$

Equation-4

Therefore, a shift in the spatial-domain is reflected as a phase change in the spectrum domain. The cross-correlation between the two frames is

$$c_{k,k+1}(n_1, n_2) = s(n_1, n_2, k+1) * s(n_1, n_2, k)$$

Equation-5

whose Fourier Transform is;

$$C_{k,k+1}(f_1, f_2) = S_{k+1}(f_1, f_2).S^*(f_1, f_2)$$

Equation-6

In order to eliminate the luminance variation influence during our phase analysis, we normalize the cross-power spectrum by its magnitude and obtain its phase as;

$$\phi[C_{k,k+1}(f_1, f_2)] = \frac{S_{k+1}(f_1, f_2).S^*(f_1, f_2)}{\left| S_{k+1}(f_1, f_2).S^*(f_1, f_2) \right|}$$

Equation-7

By Equation-3 and 7, we have,

$$\phi[C_{k,k+1}(f_1, f_2)] = e^{-j2\pi(d_1.f_1 + d_2.f_2)}$$

Equation-8

whose 2-D inverse transform is given by;

$$c_{k,k+1}(n_1, n_2) = \delta(n_1 - d_1, n_2 - d_2)$$

Equation-9

As a result, by finding the location of the pulse in the Equation-9, the displacement which refers the motion vector can be explained. In practice, the motion is not pure translational. Therefore, the phase correlation similar to what is depicted in the Figure- 2 will be obtained. In this case, the pulse will be located by finding the highest peak or a few candidates.

This invention uses key features of the phase correlation surface to control the partition of a parent frame (block) to four children quadrant frames (blocks). The partition criterion is applied iteratively until no more than a single motion component per block can be identified.

Hierarchical phase correlation is an efficient and short-cut method to estimate motion. Method in this invention can group the blocks which have similar motion, so its computational load is less then conventional phase correlation. In addition, this method can find the motion vector adaptively; means that the control mechanism adaptively updates itself.

The present invention includes four main parts which are splitting, overlapping areas, automatically splitting and iteration.

•   The starting point for a hierarchical method is a phase correlation operation between two frames, $F_t$ and $F_{t+1}$. The resulting correlation surface may have one peak of a single motion, or more peaks, of which the highest 2-3 can indicate the significant motion components of a compound motion between the frames. At this point, the height of each of these peaks is a good measure of reliability of the corresponding motion component. In light of the foregoing, splitting criteria can be formulated that if the ratio of the strength of the highest peak to that of the second peak is bigger than a predefined threshold, it is assumed that there is one dominant motion and that block is not split. If the ratio is lower, there are two or more motions included in the block and it should be further split. Otherwise, the motion vector corresponding to the highest peak is assigned to the entire block. When a block is split into quadrants, the phase correlations are performed between the two children quadrants from the two parent blocks. As shown in Figure-3, for example, if the ratio of peaks for $A_T$ and $A_{T+1}$ is lower than a threshold, it is assumed that there are two or more different motions. So quadrants $A_T$ and $A_{T+1}$ are split into four and so on.

- Assume that we are working with fixed block size of 16x16 pixels. If the phase correlations are done only over a sub block of 16x16 pixels, the correlation might be too low for a particular motion due to the small overlapping area, as shown in the Figure-4(a). Once the sub block size is extended to bigger, the overlapping area is increased for better correlation estimation, as shown in the Figure-4(b). As shown in Figure-4(b), the block size is extended to get bigger overlapping area for better correlation estimation. Suppose that, after any number of splitting operations, there remains two blocks, $B_T$ and $B_{T+1}$. During processing of phase correlation, the original blocks $B_T$ and $B_{T+1}$ are extended to a bigger size as shown in the Figure - 5.

- Alternatively, the threshold can be calculated automatically in an adaptive way. In this invention, a formula with an exponential function having a power less than 1 (preferably 0.4) was developed experimentally. Assume that L is the length between the centre of gravity of the peaks and the coordinate of the highest peak of the phase correlation result. If L is small enough, it means that the most of the energy of the phase correlation is concentrated at the peak point. So it can be assumed that there is one single dominant motion. The threshold can be devised as;

$$Threshold = \left| \left( \frac{\min imum\_of\_size\_of\_block - L}{\min imum\_of\_size\_of\_block} \right)^{0.4} \right| \qquad \text{Equation-10}$$

where minimum size of block is the small edge of the related block. If the L is small, it means that the energy observed on the one specific location, so there is a single motion. However, if the L is large, it means that energy is scattered, therefore there are more than one motion. According to the new formula, if L is small, then the threshold will increase and if L is larger, the threshold will decrease.

- According to the characteristic feature of Fourier Transform in the image processing and phase correlation, smaller size does not give true and accurate results while using Fourier Transform. On the other hand, bigger size removes effect of small motion. In order to get accurate results, the algorithm according to the present invention processes in an iterative fashion to determine whether or not quadrant block will be partitioned any further or there can be an iteration formula which is automatically calculated from the size of image.

$$Iteration = floor\left(\log_2\left(\min[row\_size, col\_size]\right) - 4\right) \qquad \text{Equation-11}$$

This formula prevents to get smaller blocks less than around 16x16 pixels which is a preferred size of smallest block.

The Peak Signal to Noise Ratio (PSNR) performance of the phase correlation algorithms in the prior art, compared to the present invention can be observed from Table 1 below.

These data are obtained as follows:

There is a conventional method to measure the PSNR value. It is computed between predicted second frame, which is created by moving macro blocks with their motion vectors from the first frame, and original second frame (Equation-12).

$$PSNR = 10.\log_{10}\left[ \frac{(peak\_to\_peak\_value\_of\_original\_data)^2}{MSE} \right] dB \qquad \text{Equation-12}$$

Twenty pairs of picture which are focused in order to process phase correlation motion estimation; and which have many types of motion as global, local, diagonal, vertical, horizontal, zooming etc.; are used. Their PSNR values and motion vectors are found by using three different methods.

The PSNR values for each method which are Phase Correlation (PC) with fixed block size, hierarchical fixed threshold and hierarchical adaptive threshold, respectively, are shown in Table.1. Video quality relates to these threshold values. Higher PSNR value refers to a higher image quality. According to this table, the third column (hierarchical phase correlation where fixed threshold value is used) shows the values of the results for the method of the present invention without using adaptive threshold. When we compare each value of these three methods, the result is that this invention with adaptive threshold has higher PSNR compared to other methods with phase correlation where fixed block size is used and hierarchical phase correlation where fixed threshold value is used. In other words, the invention with adaptive threshold gives the most accurate results.

Table.1

| # | Images | PC with fixed black size | Hierarchical PC (proposal) | Hierarchical PC (proposal) |
|---|--------|--------------------------|----------------------------|----------------------------|
|   |        | 8x8 | Fixed Thr=0.5 | Adaptive Thr. |
| 1 | Dimetrodon | 24.380 | 28.913 | 28,959 |
| 2 | Street | 19.154 | 19.899 | 19,975 |
| 3 | Tree | 18.429 | 19.417 | 19,505 |
| 4 | Hydrangea | 19.091 | 21.559 | 21,667 |
| 5 | Mequon | 18.090 | 19.979 | 20,723 |
| 6 | MiniCooper | 14.870 | 16.016 | 16,542 |
| 7 | RubberWhale | 24.217 | 25.489 | 25,735 |
| 8 | Schefflera | 18.996 | 20.069 | 20,908 |
| 9 | Urban | 18.136 | 19.169 | 19,173 |
| 10 | Venus | 17.508 | 19.340 | 20,521 |
| 11 | Waking | 20.027 | 21.206 | 21,301 |
| 12 | Wooden | 22.350 | 21.078 | 23,379 |
| 13 | Yosemite | 19.427 | 21.830 | 21,87 |
| 14 | Buildingman | 24.586 | 26.062 | 26,077 |
| 15 | Village | 14.137 | 15.531 | 15,643 |
| 16 | Window | 18.257 | 17.613 | 18,032 |
| 17 | Future | 24.077 | 24.947 | 24,965 |
| 18 | Snow | 11.350 | 11.887 | 11 ,923 |
| 19 | Tractor | 24.186 | 25.882 | 25,902 |
| 20 | Town | 18.636 | 19.240 | 19,347 |

There is another feature of this invention as shown in Table.2. It presents the motion with fewer numbers of motion vectors, furthermore its PSNR performance is the best when compared to the others. First column of table shows the names of the images, the other columns show the number of vectors for the methods with phase correlation in which fixed block size is used, hierarchical phase correlation in which fixed threshold value is used and hierarchical phase correlation in which adaptive threshold value is used, respectively.

Table.2

| # | Images | PC With fixed Block size | Hierarchical Fixed Thrs = 0.5 | Hierarchical Adaptive Threshold |
|---|--------|--------------------------|-------------------------------|---------------------------------|
| 1 | Dimetrodon | 3266 | 157 | 103 |
| 2 | Street | 3266 | 58 | 49 |
| 3 | Tree | 3266 | 4 | 4 |
| 4 | Hydrangea | 3266 | 295 | 284 |
| 5 | Mequon | 3266 | 817 | 676 |
| 6 | MiniCooper | 3266 | 4 | 4 |
| 7 | RubberWhale | 3266 | 532 | 523 |

(continued)

| # | Images | PC With fixed Block size | Hierarchical Fixed Thrs = 0.5 | Hierarchical Adaptive Threshold |
|---|---|---|---|---|
| 8 | Schefflera | 3266 | 220 | 208 |
| 9 | Urban | 3266 | 808 | 763 |
| 10 | Venus | 3266 | 514 | 506 |
| 11 | Walking | 3266 | 454 | 427 |
| 12 | Wooden | 3266 | 505 | 502 |
| 13 | Yosemite | 3266 | 604 | 245 |
| 14 | Buildingman | 3266 | 226 | 47 |
| 15 | Village | 3266 | 937 | 747 |
| 16 | Window | 3266 | 301 | 208 |
| 17 | Future | 3266 | 373 | 256 |
| 18 | Snow | 3266 | 613 | 568 |
| 19 | Tractor | 3266 | 697 | 268 |
| 20 | Town | 3266 | 793 | 757 |

Less number of vectors means less computational load, fewer data to send in order to decode the image in the receiver part and less transmission bandwidth.

As it is seen easily on both tables, the invention provides higher PSNR value with lower number of vectors and computational load.

The processing of the Fourier transform creates a large computational load for currents concept or chips. So this invention can be merged into the chips and it can also be used for any motion estimation application, such as computer vision, tracking and especially for 100/120 Hz TV application. It can be replaced with the conventional motion estimation methods used in 100/120 Hz TV's, instead of block matching.

In addition, there could be a hybrid method which includes both block matching and hierarchical phase correlation. Firstly, this invention could be used for whole sequence. If there is one dominant peak, it may be assumed that there is a global motion. If there are two dominant peaks, the pictures can be split into two parts as explained before and it may be assumed that there are two dominant large/global motions. After this step, the block matching can be processed for small motions. This technique provides less computational load if there are one or two large/global motions.

**Claims**

1.   A motion estimation method based on correlation of the frame sequences, which comprises the steps of;

   • applying global phase correlation operation between a reference frame ($F_t$) and a target frame ($F_{t+1}$);
   • calculating a ratio of a highest peak to that of a second highest peak in the resulting correlation surface ($c_{t,\ t+1}$);
   • comparing the ratio with a predefined threshold value;
   • if the ratio is higher than the threshold, assigning the motion vector corresponding to the highest peak to the entire frame ($F_{t+1}$);
   • if the ratio is lower than the threshold, splitting the frames ($F_t$, $F_{t+1}$) into quadrant frames (At, At+1);
   • extending the size of said quadrant frames (At, At+1);
   • determining whether extended quadrant frames (At, At+1) is going to be partitioned in an iterative fashion by repeating steps of applying phase correlation, calculating ratio of a highest peak to that of a second highest peak in the resulting correlation surface and comparing the ratio with a predefined threshold value for the quadrant frames of split frames,

   **characterized in that**;
   said threshold is adaptive and is calculated according to the following formula;

$$Threshold = \left| \left( \frac{\min imum\_of\_size\_of\_block - L}{\min imum\_of\_size\_of\_block} \right)^{0.4} \right|$$

in which, L is the length between center of gravity of the peaks and coordinate of the highest peak of the phase correlation result and "*minimum_of_size_of_block*" is the size of small edge of a frame, which is checked to be split or not;

and step of extending the size of said one of quadrant frames (At, At+1) is performed by adding extending areas, which are neighbor areas of said quadrant frames (At, At+1) in said reference frame $F_t$ and said target frame $F_{1+1}$, to said quadrant frames (At, At+1).

## Patentansprüche

1. **Bewegungs-Schätzverfahren** basierend auf einer Korrelation von Frame- oder Bildsequenzen, welches Verfahren die folgenden Schritte umfasst;

   - Anwenden einer globalen Phasenkorrelations-Operation zwischen einem Referenzbild oder -frame ($F_t$) und einem Zielbild oder -frame ($F_{t+1}$);
   - Berechnen eines Verhältnisses einer höchsten Spitze (highest peak) zu einer zweithöchsten Spitze in der resultierenden Korrelations(ober)fläche ($c_{t, t+1}$);
   - Vergleichen des Verhältnisses mit einem vordefinierten Schwellenwert;
   - Falls das Verhältnis größer als die Schwelle ist, Zuordnen des mit der höchsten Spitze korrespondierenden Bewegungsvektors zu dem gesamten Frame oder Bild ($F_{t+1}$);
   - Falls das Verhältnis kleiner als die Schwelle ist, Aufteilen der Frames oder Bilder ($F_t$, $F_{t+1}$) in Quadrantenbilder oder -frames (At, At+1);
   - Vergrößern oder Erweitern der Quadrantenbilder oder -frames (At, At+1);
   - Bestimmen ob die erweiterten oder vergrößerten Quadrantenbilder oder - frames (At, At+1) in iterativer Weise durch wiederholte Schritte der Anwendung einer Phasenkorrelation partitioniert werden, Berechnen des Verhältnisses einer höchsten Spitze zu einer zweithöchsten Spitze in der resultierenden Korrelationsfläche und Vergleichen des Verhältnisses mit einem vordefinierten oder gegebenen Schwellenwert für die Quadrantenbilder oder -frames von aufgeteilten Frames oder Bildern,

   **dadurch gekennzeichnet, dass**
   die Schwelle adaptiv ist und mit oder nach der folgenden Formel berechnet wird;

$$Schwelle = \left| \left( \frac{minimum\_der\_Groesse\_des\_Blocks - L}{minimum\_der\_Groesse\_des\_Blocks} \right)^{0,4} \right|$$

   wobei L die Länge zwischen der gewichteten Mitte oder dem Schwerpunkt (centre of gravity) der Spitzen und der Koordinate der höchsten Spitze des Ergebnisses der Phasenkorrelation und "*minimum_of_size_of_block*" die Größe der kleinen Kante (edge) eines Frames oder Bilds ist, das darauf geprüft wird, ob es aufgeteilt wird oder nicht;
   und der Schritt der Erweiterung oder Vergrößerung des einen Quadrantenbilds oder-frames (At, At+1) durchgeführt wird durch Hinzufügen erweiternder Bereiche (extended areas), die benachbarte Bereiche der Quadrantenbilder (At, At+1) oder-frames in dem Referenzbild oder -frame $F_t$ und dem Zielbild oder -frame $F_{t+1}$ zu dem Quadrantenbild oder -frame (At, At+1) sind.

## Revendications

1. Procédé d'évaluation de mouvements basé sur une corrélation des séquences de trames, qui comprend les étapes suivantes :

   - l'application d'une opération de corrélation de phase globale entre une trame de référence ($F_t$) et une trame cible ($F_{t+1}$) ;

- le calcul d'un rapport d'un sommet le plus élevé à un deuxième sommet le plus élevé de la surface de corrélation résultante ($C_{t, t+1}$) ;
- la comparaison du rapport à une valeur seuil prédéfinie ;
- si le rapport est supérieur au seuil, l'affectation du vecteur de mouvement correspondant au sommet le plus élevé à la trame ($F_{t+1}$) entière ;
- si le rapport est inférieur au seuil, la séparation des trames ($F_t$, $F_{t+1}$) en trames de quadrant (At, At+1) ;
- l'agrandissement de la taille desdites trames de quadrant (At, At+1) ;
- la détermination d'un éventuel partitionnement des trames de quadrant agrandies (At, At+1) de façon itérative par la répétition des étapes d'application d'une corrélation de phase, de calcul du rapport du sommet le plus élevé à un deuxième sommet le plus élevé dans la surface de corrélation résultante et de comparaison du rapport à une valeur seuil prédéfinie pour les trames de quadrant des trames séparées,

**caractérisé en ce que** :

ledit seuil est adaptatif et est calculé selon la formule suivante :

$$\text{Seuil} = \left| \left( \frac{\text{min imum\_de\_la\_taille\_du\_bloc} - L}{\text{min imum\_de\_la\_taille\_du\_bloc}} \right)^{0,4} \right|$$

dans laquelle L est la longueur entre le centre de gravité des sommets et les coordonnées du sommet le plus élevé du résultat de la corrélation de phase et « minimum_de_la_taille_du_bloc » est la taille du petit bord d'une trame, qui est marquée comme devant être séparée ou non ;
et l'étape d'agrandissement de la taille de ladite une des trames de quadrant (At, At+1) est effectuée par l'ajout de zones d'agrandissement, qui sont des zones voisines desdites trames de quadrant (At, At+1) dans ladite trame de référence $F_t$ et ladite trame cible $F_{t+1}$, auxdites trames de quadrant (At, At+1).

**Figure- 1**

**Figure- 2**

Frame (t)

Frame (t+1)

Level 1

A(t)

Frame (t)

Frame (t+1)

Level 1

A(t+1)

**Figure-3**

(a)

(b)

**Figure- 4**

frame $_{T+1}$

Extended area

frame $_T$

$B_{T+1}$

$B_T$

**Figure- 5**

Reference
Frame

Target
Frame

RGB

RGB

RGB2YIQ

RGB2YIQ

$Y_{reference}$

$Y_{target}$

Fourier
Trans.

Fourier
Trans.

Phase Corr.

interpolation
by 2

Fourier
Trans.

Ratio

$Y_{target}$

Fixed
threshold

Ratio > thres

Split by 4

NO

YES

One dominant motion, not split

**Figure- 6**

**Figure- 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARGYRIOU, V. ; VLACHOS, T.** Motion Estimation Using Quad-Tree Phase Correlation. *IEEE International Conference,* 2005, vol. 1